# EUROPEAN PATENT APPLICATION

(11) **EP 4 480 929 A1**
(43) Date of publication of application: **25.12.2024**
(21) Application number: 22924610.3
(22) Date of filing: 02.02.2022
(51) Int. Cl.: C02F 1/52, C02F 1/56, C02F 1/70, C02F 1/76

(54) **COMPOSITION AND METHOD FOR TREATING AND PURIFYING WATER BY MEANS OF A COMBINATION OF COMPOUNDS DERIVED FROM ALUMINIUM, CHLORINE AND SODIUM**

(71) Applicant: Clean Water Spa, Concepción (CL)
(72) Inventor: TORRES SAAVEDRA, Óscar Alejandro, 1601 Torre A Concepción (CL)
(74) Representative: ABG Intellectual Property Law, S.L.
(86) International application number: PCT/CL2022/050012
(87) International publication number: WO 2023/147677

(57) **Abstract**

The invention provides a portable composition for treating and/or purifying water according to regulations in force. The composition allows water to be treated quickly with a safe composition and in small doses of additives, without consuming electrical energy. A method is also provided for treating and purifying water using the formula according to the invention.

## Description

### FIELD OF THE INVENTION

The present invention relates to compositions, methods and kits for use in the treatment of water for agricultural or industrial use and/or for the purification thereof. The composition is readily portable, for personal or domestic use.

### BACKGROUND OF THE INVENTION

The availability of sufficient amounts of good-quality water is fundamental for all biological processes, for biodiversity and ecosystem maintenance, for human health and for primary and secondary production functions.

Potable water or water suitable for human consumption is water that can be consumed directly and safely for drinking or preparing foods.

Internationally, the World Health Organisation elaborates a series of guidelines on the quality of water, particularly potable water, the safe use of wastewater and safe recreational water environments.

In Chile, potable water is water that complies with the physical, chemical and bacteriological requirements established in the NCH 409/1 standard, which ensure its disinfection, harmlessness and suitability for human consumption.

In the European Union, regulation 98/83/EU establishes the maximum and minimum values for the content of minerals and different ions, in addition to pathogenic germs. According to the WHO, climate change, increased water shortage, population growth, demographic changes and urbanisation pose permanent challenges for water supply systems. From now to 2025, half of the world population will live in areas with a water shortage. All this, without considering possible natural or social disasters, could further limit access to water and the possibility of having potable water.

In urban areas, water filtration is carried out in treatment plants particularly designed according to the water source feeding the plants and the requirements of local regulations. In the case of industries, some of them have their own treatment plants. However, in rural areas, isolated areas or where water sources are limited, the need for treating water is addressed in a less industrialised manner.

An example thereof is the portable treatment of water comprising from portable devices and systems for treating water from lakes, rivers or wells, to reagent mixtures for personal or domestic use, which allow disinfecting water in situations in which access to potable water is not possible. The devices and/or reagents can be made commercially or at home.

Portable compositions are used in emergency or catastrophic situations, but also in nonadverse conditions, for example, when performing outdoor activities far away from urban potable water sources. The most well-known ways for treating water in extreme conditions are boiling and disinfection with chlorine, in addition to the use of filters, activated carbon, ozone disinfection, ultraviolet purification, among others. The selection of each methodology will depend on the initial conditions of the water to be treated and on the resources available at the moment of treatment.

On the other hand, natural ecosystems and agriculture are the biggest consumers of the Earth's fresh water, where the use of water for agricultural purposes corresponds to 70% of the water extracted worldwide.

The demand for water by various sectors involves satisfying the needs of the ecosystem, the human population, agriculture and industry. The ability to better harness natural water sources and to make wastewater useful by means of treatment and reutilisation thereof is an issue of economic and environmental importance that highlights the need to improve the efficiency and productivity of water use and to continue innovating the methods for treating, clarifying and purifying available water.

In the prior art, there are various formulations or alternatives for treating water which seek to meet the minimum requirements so that it is suitable for human consumption in terms of microbiological and potability quality. For example, document WO03011769A2 describes a water treatment composition comprising a primary coagulant compound, a disinfectant and an oxidant system, wherein the preferred compositions furthermore contain one or more flocculants, a cationic coagulant aid, a water-soluble alkali, a water-insoluble silicate and a food additive or nutrient source. It is a complex formula comprising at least 8 components, wherein a range of 50-2000 mg of composition, preferably, 500 mg of the composition, must be added per litre of water to be purified, limiting its portability.

Similarly, document WO2002000557A2 presents a composition comprising a main coagulant and a bridging flocculant, wherein the proportion between both is from 10:1 to 100:1. The preferred compositions also contain one or more cationic coagulant aids, a microbiocidal disinfectant, a water-soluble alkali, a water-insoluble silicate and a food additive or nutrient source. Although it is indicated that low concentrations of the composition could be used, the examples describe the use 500-620 mg of composition per litre of water to be treated.

Document US5681475A describes a portable composition for purifying small volumes of water, comprising an organo-chlorine compound as a disinfectant-sanitising agent; a solid inorganic metal salt as a coagulant-precipitate agent; a solid alkali as a dispersionbuffer agent; a primary colloid flocculant; a secondary colloid flocculant, cellulose as an agglomeration matrix and prefilter, and an ion exchange absorbent. It therefore relates to a formula which requires at least 7 compounds formulated in a 600 mg tablet which allows treating only 1 litre of water.

With respect to water disinfection compositions, Procter & Gamble and the CDC (Centers for Disease Control and Prevention) published an informative document (2013) in which domestic treatment with the commercial composition elaborated by P&G is presented as a reliable alternative. However, it has certain limitations in terms of implementation because it requires a bucket for 10 litres of water, a piece of cotton cloth and a second container, in addition to being expensive taking into account the small volume of water that is treated. According to the WHO's evaluation, the product achieves a 2-star performance (50% of the maximum criterion) in terms of microorganism reduction. The product is presented in sachets of 4 g for treating 10 L of water.

Marois-Fiset J. T. *et al.* (2016), in *Laboratory evaluation of a new coagulant*/*disinfectant point-of-use water treatment product for emergencies* addresses the effectiveness of a formulation comprising ferric sulphate as a coagulant and calcium hypochlorite as a disinfectant, in addition to other non-disclosed components. They indicate that the disinfection time is of the order of 22 minutes, but the water tastes better after applying the formulation for one hour. Each sachet of Pureit^{®} contains 2.5 g of composition for treating 10 L of water.

Despite the availability of various commercial portable formulae, not all of them ensure the use of suitable compounds for human health in reduced concentrations.

The treatment of water for agricultural and industrial use and/or purification thereof is a permanent need. Although portable water treatment solutions are specific, they are viable for application in an almost universal manner. Therefore, there is still a need for improved formulations that overcome the limitations of current alternatives in terms of performance, portability, cost and effectiveness.

### BRIEF DESCRIPTION OF THE FIGURES

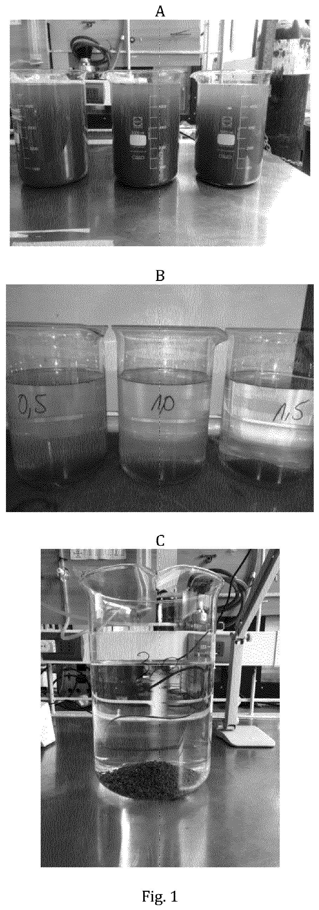

Figure 1. Images of the treatment of water samples from the Biobío river with the composition of the invention.
   A. Water sample obtained of the Biobío river. Before treatment. pH=7, turbidity 520 NTU, conductivity 209 µS/cm, TOC 2.56 mg/L.
   B. Samples treated with the composition of the invention after 30 minutes.
      Dose 0.5 X: pH=7.6, turbidity 18.3 NTU, conductivity 268 µS/cm, TOC 3.22 mg/L.
      Dose 1.0 X: pH=7.5, turbidity 16.6 NTU, conductivity 290 µS/cm, TOC 4.13 mg/L.
      Dose 1.5 X: pH=7.5, turbidity 10.3 NTU, conductivity 319 µS/cm, TOC 5.05 mg/L.
   C. Water sample subjected to a dose of 3.0 X after 30 minutes. pH=7.5, turbidity 2.4 NTU, conductivity 822 µS/cm, TOC 10.04 mg/L.
Figure 2. Effect of the composition of the invention (CW reagent) on the flotation of chalcopyrite (CuFeS₂).
Figure 3. Effect of the composition of the invention (CW reagent) on the flotation of molybdenite (MoS₂).

### DETAILED DESCRIPTION OF THE INVENTION

The present invention provides a composition for the treatment of clear water in treatment plants or systems or in domestic use conditions. The water to be treated comprise fresh water from rivers, streams, ponds or lakes or contaminated potable water.

Particularly, the composition of the invention allows treating water for agricultural or industrial use and purifying water according to the parameters described in water quality standards. For example, by means of using the composition of the invention water is clarified and disinfected in the pH ranges according to Chilean standard NCh409. The advantages of the invention include, among others, its high treatment and purification capacity with a minimum proportion of reagents, together with a quick action, which allows obtaining potable water in 20 to 30 minutes.

Another advantage of the invention lies in the possibility of using the composition or reagent mixture according to the invention by applying it with or without electrical energy (manually). In other words, it is possible to perform the step of mixing or stirring without consuming electrical energy.

The present invention is furthermore free of ferric sulphate, since this component is extremely hazardous to human health.

The composition of the invention can be used in batch and continuous processes. In a preferred embodiment, the composition is in the form of a unit dose and used for treating and purifying batches of a small volume of contaminated or non-potable water. A small volume of water corresponds to the volume for immediate consumption in domestic or personal use, or for short-term storage and consumption, of the order of 0.1 to 100 litres, preferably from 1 to 20 litres. However, the composition according to the invention allows treating higher volumes of 100 to 1000 litres or more, adding the amounts of the composition of the invention needed for treating the required volumes of water.

The unit dosage amounts of the composition are in the range of between 20 and 700 mg per litre of water to be treated, preferably between 25 and 100 mg per litre of water to be treated, more preferably between 35 and 75 mg per litre.

The composition of the present invention is in a presentation comprising powder, granulated material or tablet formulations, among others, in an amount sufficient for treating a given volume of contaminated water. In a preferred embodiment, the presentation is an easy-to-dissolve powder formulation.

The composition according to the invention comprises:
- 55 to 82% of a coagulating agent selected from aluminium sulphate and sodium aluminate;
- 2 to 10% of a disinfecting agent selected from chlorine-based disinfectants, preferably calcium hypochlorite or sodium hypochlorite;
- 15 to 30% of an alkalinising agent selected from hydrated lime and sodium carbonate;
- 1 to 5% of a flocculating agent selected from anionic polyacrylamide and activated starch,
wherein the disinfecting agent to coagulating agent ratio is 1:10 to 1:15 and the flocculating agent to alkalinising agent ratio is 1:5 to 1:10.

Optionally, the flocculating agent to coagulating agent proportion is in the range of 1:20 to 1:30.

There is furthermore provided a method for treating and purifying water using the composition of the invention, comprising the steps of:
i. Adding to the water to be treated one or more doses of the composition according to the invention and mixing or stirring until the composition has dissolved completely in the water, for about 1 to 5 minutes. The mixing step can be performed with any manual or mechanical mixing method, for example, by means of a stirrer with blades connected to a wind-powered system.
ii. Decanting the flocs and solids present in the water, allowing the mixture to stand for 5 to 30 minutes; and
iii. Physically separating solid matter from potable water by passing the upper layer of water to another container directly or through filtering means, discarding the lower layer with sediment.

Optionally, after decanting and/or separating the solid matter, it is possible to repeat steps 1 to 3 if the water is turbid or not completely clear.

There is furthermore provided a kit for treating and purifying water comprising:
a. one or more doses of the composition according to the invention; and
b. means for physically separating solid matter from potable water.

The unit doses contain between 20 mg/L and 700 mg/L, preferably between 25 and 100 mg of the composition per litre of water to be treated, preferably between 35 and 75 mg per litre.

The unit doses are formulated according to the volume to be treated, where they can be for treating 1 L (canteen), 15 L (domestic), or other volumes, for example, for treating 100 to 1000 L.

The separating means are selected from filter cloths made of cotton, polyester, wool or other natural or synthetic fibres or mixtures thereof.

### Uses.

The present invention allows purifying water quickly and safely for human consumption. Furthermore, the composition according to the invention allows treating water for agricultural or industrial use. In both cases, the clarity and disinfection parameters required by the regulations in force are met.

Among industrial uses, there is the option of treating process water for mining, in which the use of treated water with the present invention allows more mineral to be recovered with respect to that obtained with process water that is not previously treated. Therefore, included among the preferred uses for the invention include are the treatment of water for use in mining, agriculture, potable water and wastewater treatment, among others.

The composition according to the invention can be incorporated as part of the steps in water desalinisation, as a step prior to desalinisation. When using the composition of the invention in salt water, water quality is improved by the precipitation of impurities, making the reverse osmosis process more efficient.

### EXAMPLES

The following examples are provided to illustrate the exemplary embodiments of the invention, but in no case limit the invention to what is described therein.

### Example 1: Composition according to the invention

Batches of the invention are prepared according to the following compositions:

| | Formulation 1 (g) | Formulation 2 (g) | Formulation 3 (g) | Formulation 4 (g) |
|---|---|---|---|---|
| Aluminium sulphate | 50 | 45 | 49.5 | 55 |
| Calcium hypochlorite | 5 | 4.3 | 3.75 | 5.5 |
| Sodium carbonate | 20 | 21 | 17.5 | 18 |
| Anionic polyacrylamide | 2 | 3 | 2.25 | 2 |
| Total | 77 | 73.3 | 73 | 80.5 |

The composition was metered in unit doses for treating 15 litres of water in the following doses:

| Dose name | Dose for 15 litres | mg/L |
|---|---|---|
| 0.5 | 0.375 g | 25 |
| 1.0 | 0.750 g | 50 |
| 1.5 | 1.125 g | 75 |
| 3.0 | 2.250 g | 150 |

### Example 2: Treatment of water from a river

Treatment of water from a river was evaluated through the pH, conductivity and turbidity measurements of treated water and dissolved organic carbon (TOC). The doses of the composition of the invention were added to water obtained from the Biobío river. pH measurements were performed on a HANNA pH and conductivity meter, turbidity measurements were carried out on a HACH 2100 N turbidimeter; whereas TOC measurements were performed on Shimadzu TOC-L equipment.

Tables 1 to 4 show the pH, turbidity, conductivity and TOC results for the different evaluated doses.

**Table 1. Results of pH, turbidity, conductivity and TOC measurements over time for a dose of 0.5 X.**

| **Dose = 0.5** | | | | |
|---|---|---|---|---|
| Time, min | pH | Turbidity, NTU | Conductivity, µS/cm | TOC, ppm |
| 0 | 7.00 | 520 | 209 | 2.56 |
| 5 | 7.64 | 70.1 | 269 | |
| 12 | 7.60 | 23.5 | 268 | |
| 19 | 7.60 | 21.6 | 268 | |
| 26 | 7.60 | 20.5 | 268 | |
| 35 | 7.60 | 18.3 | 268 | 3.22 |

**Table 2. Results of pH, turbidity, conductivity and TOC measurements over time for a dose of 1.0 X.**

| **Dose = 1.0** | | | | |
|---|---|---|---|---|
| Time, min | pH | Turbidity, NTU | Conductivity, µS/cm | TOC, ppm |
| 0 | 7.00 | 520 | 209 | 2.56 |
| 5 | 7.50 | 68.7 | 291 | |
| 12 | 7.50 | 19.9 | 291 | |
| 19 | 7.50 | 16.8 | 290 | |
| 26 | 7.50 | 16.7 | 290 | |
| 35 | 7.50 | 16.6 | 290 | 4.13 |

**Table 3. Results of pH, turbidity, conductivity and TOC measurements over time for a dose of 1.5 X.**

| **Dose = 1.5** | | | | |
|---|---|---|---|---|
| Time, min | pH | Turbidity, NTU | Conductivity, µS/cm | TOC, ppm |
| 0 | 7.00 | 520 | 209 | 2.56 |
| 5 | 7.47 | 69.5 | 325 | |
| 12 | 7.47 | 10.7 | 319 | |
| 19 | 7.47 | 10.4 | 319 | |
| 26 | 7.47 | 10.4 | 319 | |
| 35 | 7.47 | 10.3 | 319 | 5.05 |

**Table 4. Results of pH, turbidity, conductivity and TOC measurements over time for a dose of 3.0 X.**

| **Dose = 3.0** | | | | |
|---|---|---|---|---|
| Time, min | pH | Turbidity, NTU | Conductivity, µS/cm | TOC, ppm |
| 0 | 7.00 | 520 | 209 | 2.56 |
| 5 | 7.49 | 2.7 | 811 | |
| 12 | 7.49 | 2.4 | 819 | |
| 19 | 7.49 | 2.4 | 822 | |
| 26 | 7.49 | 2.4 | 823 | |
| 35 | 7.49 | 2.4 | 822 | 10.04 |

Figure 1 shows the effect of using the composition. Figure 1A shows untreated samples; Figures 1B and 1C show the effect 30 minutes after treatment for various doses of the composition.

The doses indicated as 0.5, 1, 1.5 and 3 correspond to the added amounts of unit doses of 50 mg per litre.

The results show that the composition according to the invention allows reducing the turbidity of the water from the Biobío river significantly from the initial values of 520 NTU to the minimum values of 2.4 NTU.

The pH, conductivity and TOC values tend to increase as the composition is added, and this can be associated with the chemistry of the composition.

### Example 3: Treatment of process water used in the copper and molybdenum mineral flotation step

The effect of the composition of the invention (CW reagent) for the treatment of process water used in the copper and molybdenum mineral flotation step was evaluated. The result evaluation parameter was an increase in the recovery of pure chalcopyrite (CuFeS₂) and molybdenite (MoS₂) minerals as a result of pre-treating the process water with the CW reagent (composition).

Tests were performed on a small scale in a Partridge and Smith cell, adjusted to pH 10 with lime, with 40 mg/L of MIBC foaming agent, 3 minutes of conditioning with a flotation reagent, 136 cm³/min of nitrogen flow and 5 minutes of flotation. Flotation tests were performed with process water obtained from a concentrator plant that treats minerals with a high clay content; this water was used untreated and treated with CW reagent (composition) at doses of 1, 1.5 and 3 X, or amount of unit doses, from which clear water was obtained for the experiments.

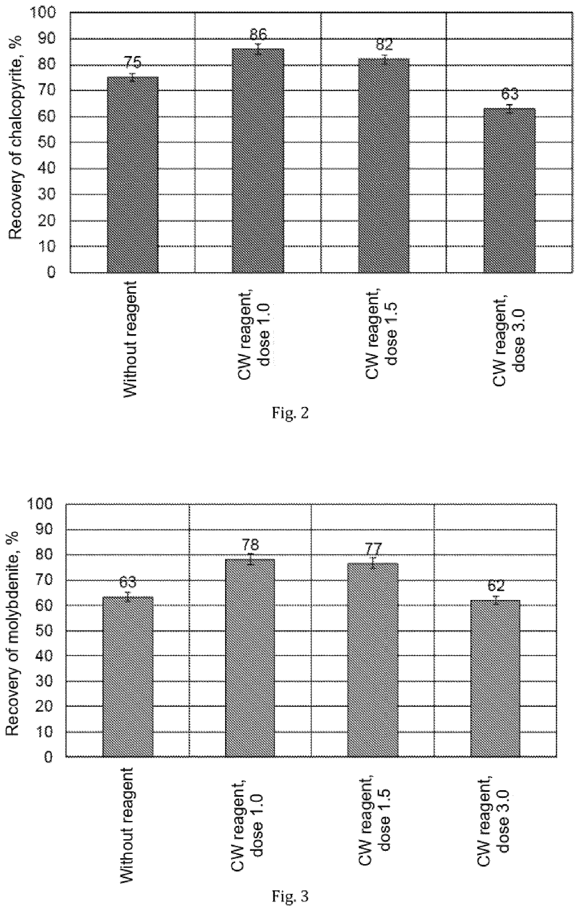

Figures 2 and 3 show the results of the recovery of chalcopyrite and molybdenite against the dose of the CW reagent (composition) used for pre-treating the process water. The results show that, with a dose of 1.0 X, increases of 11 percentage points in the recovery of chalcopyrite and 15 percentage points of molybdenite are achieved. A decrease in recovery is observed at higher doses of the CW reagent (composition). The results show an advantageous effect for the recoveries of copper and molybdenum.

### Example 4: Comparison of the effect of the composition of the invention in water samples from various sources

**Table I.- Water treatment plant - Linares: Wastewater (sewage)**

| | | **Measured value** | | | |
|---|---|---|---|---|---|
| **Parameter** | **Unit of expression** | **Without Reagent** | **With Reagent** | **NCh409 Of.2005** | **Test method** |
| Ammonia (D) | mg/L | 3.160 | 0.747 | 1.5 | Superintendency of Sanitary Services (SISS) Manual ME-27-2007 |
| Arsenic (C) | mg/L | <0.001 | <0.001 | 0.01 | SISS Manual ME-12-2007 |
| Copper (C) | mg/L | 0.04 | <0.02 | 2 | SISS Manual ME-04-2007 |
| True copper (B) | u Pt-Co | 5.00 | <0.03 | 20 | SISS Manual ME-24-2007 |
| Total coliforms (I) | NMP/100 ml | >2419.2 | <1.8 | 0 | NCh2043 Of.98 |
| *Escherichia coli* (I) | P/A | 1.0 | Absence | Absence | NCh2043 Of.98 |
| Iron(C) | mg/L | 0.10 | <0.05 | 0.3 | SISS Manual ME-07-2007 |
| Phenolic compounds (D) | ug/L | <1 | <0.01 | 2 | SISS Manual ME-32-2007 |
| Fluoride (B) | mg/L | 0.32 | <0.2 | 1.5 | SISS Manual ME-06-2007 |
| Mercury (C) | mg/L | <0.0005 | <0.0005 | 0.001 | SISS Manual ME-15-2007 |
| Manganese (C) | mg/L | 0.03 | 0.02 | 0.1 | SISS Manual ME-08-2007 |
| Nitrites (B) | mg/L | 0.0230 | <0.02 | 3 | SISS Manual ME-17-2007 |
| pH (B) | - | 6.68 | 7.91 | 6.5-8.5 | SISS Manual ME-29-2007 |
| Total dissolves solids (B) | mg/L | 300.0 | 230.0 | 1500 | SISS Manual ME-31-2007 |
| Seleniu m (C) | mg/L | <0.001 | <0.001 | 0.01 | SISS Manual ME-10-2007 |
| Lab. temperature (B) | °C | 15.60 | 14.10 | | SISS Manual ME-29-2007 |
| Turbidity (NTU) (I) | NTU | 31.00 | 0.99 | 4 | SISS Manual ME-03-2007 |
| Zinc (C) | mg/L | 0.05 | <0.02 | 3 | SISS Manual ME-11-2007 |
| Soil pH | - | | 6.99 | | |
| Soil temperature | °C | | 19.00 | | |

**Table II.- Surface water from river- Til Til**

| | | | **Measured value** | | | |
|---|---|---|---|---|---|---|
| **Parameter** | | **Unit of expression** | **Without Reagent** | **With Reagent** | **NCh409 Of.2005** | **Test method** |
| | Arsenic (C) | mg/L | <0.001 | <0.001 | 0.01 | SISS Manual ME-12-2007 |
| | Cadmium (C) | mg/L | <0.005 | <0.005 | 0.01 | SISS Manual ME-13-2007 |
| | Chlorides (B) | mg/L | 163.92 | 11.09 | 400 | SISS Manual ME-28-2007 |
| | Cyanide (F) | mg/L | <0.02 | <0.02 | 0.05 | SISS Manual ME-14-2007 |
| | Copper (C) | mg/L | <0.03 | <0.03 | 2 | SISS Manual ME-04-2007 |
| | True copper (B) | u Pt-Co | 250.00 | 100.00 | 20 | SISS Manual ME-24-2007 |
| | Total chromium (C) | mg/L | <0.02 | <0.02 | 0.05 | SISS Manual ME-05-2007 |
| | Iron (C) | mg/L | 2.74 | 0.96 | 0.3 | SISS Manual ME-07-2007 |
| | Phenolic compounds (D) | ug/L | <1 | <1 | 2 | SISS Manual ME-32-2007 |
| | Fluoride (B) | mg/L | <0.20 | <0.20 | 1.5 | SISS Manual ME-06-2007 |
| | Mercury (C) | mg/L | <0.0005 | <0.0005 | 0.001 | SISS Manual ME-15-2007 |
| | Nitrites (B) | mg/L | <0.0150 | <0.0150 | 3 | SISS Manual ME-17-2007 |
| | Lead (C) | mg/L | <0.01 | <0.01 | 0.05 | SISS Manual ME-18-2007 |
| | pH (B) | - | - | 6.96 | 6.5-8.5 | SISS Manual ME-29-2007 |
| | Selenium (C) | mg/L | <0.001 | <0.001 | 0.01 | SISS Manual ME-10-2007 |
| | Sulphates (B) | mg/L | 21.00 | 19.80 | 500 | SISS Manual ME-30-2007 |
| | Lab. temperature (B) | °C | | 15.80 | | SISS Manual ME-29-2007 |
| | Zinc (C) | mg/L | 0.15 | 0.03 | 3 | SISS Manual ME-11-2007 |

### Example 5: Comparative results

One dose of the composition, P&G Purifier Of Water, with 0.5% powder disinfectant and Public Health Institute (ISP) registration D-704/21, was obtained.

The mixture was prepared according to manufacturer's instructions by adding 4 g of the product to 10 litres of water to be treated.

Moreover, one dose of 0.75 g of the composition of the invention was added to 15 litres of water to be treated.

| | Composition of the invention | Product with ISP registration D-704/21 |
|---|---|---|
| Volume of water to be treated | 15 L | 10 L |
| Amount of unit dose of the product | 0.75 g | 4 g |
| mg of product per litre to be treated | 50 | 400 |

The added dose in both cases is that which allows obtaining potable water according to NCH 409, such that the composition according to the present invention requires 8 times less product with respect to an alternative commercial composition for purifying water.

## Claims

1. A composition for treating and purifying water, **characterised in that** it comprises:
- 55 to 82% of a coagulating agent;
- 2 to 10% of a disinfecting agent;
- 15 to 30% of an alkalinising agent; and
- 1 to 5% of a flocculating agent.

2. The composition according to claim 1, **characterised in that** the disinfectant to coagulant ratio is 1:10 to 1:15.

3. The composition according to claim 1, **characterised in that** the flocculant to alkaliniser ratio is 1:5 to 1:10.

4. The composition according to claim 1, **characterised in that** the coagulating agent is selected from aluminium sulphate and sodium aluminate.

5. The composition according to claim 1, **characterised in that** the disinfecting agent is selected from chlorine-based disinfectants.

6. The composition according to claim 5, **characterised in that** the disinfecting agent is calcium hypochlorite or sodium hypochlorite.

7. The composition according to claim 1, **characterised in that** the alkalinising agent is selected from hydrated lime and sodium carbonate.

8. The composition according to claim 1, **characterised in that** the flocculating agent is selected from anionic polyacrylamide and activated starch.

9. The composition according to any of claims 1 to 8, **characterised in that** it is prepared in powder, granulated material or tablet formulations.

10. The composition according to claim 9, **characterised in that** it is a formulation in tablet form.

11. A method for treating and purifying water, **characterised in that** it comprises the steps of:
i. adding to the water one or more doses of a composition according to any of claims 1 to 8, and mixing,
ii. decanting the flocs and solids present in the water, and
iii. physically separating solid matter from potable water.

12. The method according to claim 11, **characterised in that** the mixing of step i. is performed with electrical energy or manually (without electrical energy).

13. The method according to claim 11, **characterised in that** the composition is added in a proportion of 20 mg/L to 700 mg/L, preferably between 25 and 100 mg/L.

14. A kit for treating and purifying water, **characterised in that** it comprises:
a. one or more doses of a composition for treating and purifying water, wherein each of the doses comprises:
- 55 to 82% of a coagulating agent;
- 2 to 10% of a disinfecting agent;
- 15 to 30% of an alkalinising agent; and
- 1 to 5% of a flocculating agent;
wherein the disinfectant to flocculant ratio is 1:10 to 1:15 and the coagulant to alkaliniser ratio is 1:5 to 1:10; and
b. means for physically separating solid matter from potable water.
